Europäisches Patentamt

European Patent Office

Office européen des brevets

(11) Publication number: **0 618 571 A1**

# EUROPEAN PATENT APPLICATION

(21) Application number: **94103672.5**

(22) Date of filing: **10.03.94**

(51) Int. Cl.5: **G11B 7/13**

(30) Priority: **29.03.93 JP 69782/93**

(43) Date of publication of application:
**05.10.94 Bulletin 94/40**

(84) Designated Contracting States:
**DE FR GB**

(71) Applicant: **KABUSHIKI KAISHA TOSHIBA**
**72, Horikawa-cho**
**Saiwai-ku**
**Kawasaki-shi Kanagawa-ken Tokyo (JP)**

(72) Inventor: **Takeuchi, Ryoji, c/o Intell. Property**
**Div.**
**Kabushiki Kaisha Toshiba,**
**1-1 Shibaura 1-chome**
**Minato-Ku, Tokyo 105 (JP)**

(74) Representative: **Lehn, Werner, Dipl.-Ing. et al**
**Hoffmann, Eitle & Partner,**
**Patentanwälte,**
**Arabellastrasse 4**
**D-81925 München (DE)**

(54) **Optical disk apparatus.**

(57) In an optical disk apparatus according to the present invention, the cathodes of detectors (D1, D2) of a photodetector (8) for generating a tracking signal and an information reproduction signal are connected to each other at a common connection point (56), and the anodes thereof are connected to servo amplifiers (52, 54). A high-speed operational amplifier (50) is connected to the common connection point (56). Since an addition current of currents flowing through the detectors (D1, D2) flows to the common connection point (56), a signal, which is amplified by the high-speed operational amplifier (50) at the common connection point, is output as a reproduction signal. A difference signal between detection signals amplified by the servo amplifiers (52, 54) is supplied to a tracking control circuit as a tracking signal. The high-speed operational amplifier (50) is fixed to a carriage in the movable section of the apparatus, on which an optical head is mounted, and the servo amplifiers (52, 54) are fixed to the fixed section of the apparatus. Therefore, a low-noise reproduction signal can reliably be generated, without exercising an adverse influence on a tracking detection signal.

EP 0 618 571 A1

The present invention relates to an optical disk apparatus for recording/reproducing information on/from an optical disk having recording tracks and, more particularly, to an optical disk apparatus having an improved signal transmission circuit for transmitting a signal detected by an optical head.

An optical disk apparatus for recording/reproducing information on/from an optical disk having recording tracks by a laser beam emitted from a semiconductor laser mounted on an optical head, is put into practical use.

In this type of optical disk apparatus, an optical head is moved in the radial direction or the tracking direction of an optical disk rotated at high speed by a linear motor or a linear actuator, and a light beam from the optical head is directed to a target track, from which information is read out. Whenever a target track of the rotating optical disk is irradiated with a light beam, information is optically read out from the optical disk.

The optical head is provided with an object lens for converging a light beam on the optical disk to read information therefrom. The object lens can be moved in the direction of its optical axis, i.e., in the focus direction, and slanted toward the tracking direction in order to trace a desired track with a light beam. The object lens is supported by a focus drive coil and a tracking drive coil. Furthermore, the optical head includes a focus detection optical system and its corresponding focus detector in order to form the minimum beam spot on the optical disk while the object lens is in focusing state. The optical head also includes a tracking detection optical system and its corresponding tracking detector in order to correctly trace a tracking guide with a light beam while the object lens remains in a tracking state. A focus control circuit for processing a detection signal supplied from the focus detector to generate a focus signal, a tracking control circuit for processing a detection signal supplied from the tracking detector to generate a tracking signal, and a signal processing circuit for processing a detection signal supplied from the tracking detector to generate a reproduction signal, are fixed outside the optical head. The focus drive coil and tracking drive coil are driven in response to the focus signal from the focus control circuit and the tracking signal from the tracking control circuit, and the object lens is kept in the focus and tracking states. In these states, the reproduction signal is generated.

In the above-described optical disk apparatus, normally, the optical head is movable, while the focus control circuit, tracking control circuit and signal processing circuit are fixed outside the optical head. Therefore, the optical head and these circuits are connected by flexible signal lines.

In a conventional optical disk apparatus, a movable optical head and a fixed circuit board are coupled to each other by a flexible signal line, e.g., a flexible printed circuit. Since a detection signal supplied from the optical head is weak, the signal is likely to be attenuated or noise is likely to be mixed into the signal by the influence of the resistance, floating capacitance or floating inductance of the flexible printed circuit. Thus, there occurs a drawback wherein the protection signal decreases in precision even if it is amplified by the fixed circuit board.

U. S. Patent No. 5,010,541 discloses a method for resolving the above drawback. According to the method, a detection signal supplied from an optical head is divided into a high-frequency signal generated when tracks are counted at high speed and a low-frequency signal generated when tracks are counted at low speed, only the high-frequency signal is amplified by an amplifier mounted on a carriage, and the amplified signal is transmitted to the fixed circuit through the flexible printed circuit. However, this method has a drawback wherein a tracking signal of several hundreds of kHz cannot be generated when the tracks are counted at high speed since the low-frequency signal, which is limited to several tens of kHz, is amplified by the fixed circuit board and the high-frequency signal is amplified by the amplifier mounted on the carriage.

An object of the present invention is to provide an optical disk apparatus capable of reliably generating a low-noise reproduction signal without exercising an adverse influence on a tracking detection signal.

According to one aspect of the present invention, there is provided an optical disk apparatus comprising:

optical means for converging a light beam on an optical recording medium and guiding the light beam from the optical recording medium;

at least two photo-sensitive sections for converting the light beam guided from the optical means into current signals, each having one and another terminals, the one terminals of the photo-sensitive sections being connected to a common connecting point;

means for applying a potential to the common connecting point from a power supply,

a differential amplifier having first and second input terminals, for amplifying a current signal flowing through the applying means and outputting the amplified signal as a reproducing signal, a divided voltage as a reference signal being applied from the power supply to the first input terminals and the second input terminals being connected to the common connecting point; and

amplifying means for amplifying the current signals from the photo-sensitive sections, to which the another terminals of the photo-sensitive sections are connected.

According to another aspect of the present invention, there is provided an optical disk apparatus comprising:

converging means for converging a light beam on an optical recording medium;

optical means for guiding the light beam from the optical recording medium;

at least two photo-sensitive sections for converting the light beam from the optical means into current signals, each having one and another terminals, the one terminals of the photo-sensitive sections being connected to a common connecting point;

an optical head on which the converging means, the optical means and the photo-sensitive sections are mounted;

converting means, which is fixed on the optical head, for converting the current signal from the common connecting point to a voltage signal;

a voltage source, connected to the common connecting point, for applying a voltage to the photo-sensitive sections;

an element connected between the voltage source and the common connecting point;

dividing means for dividing a voltage supplied from the voltage source and applying a divided voltage as a reference voltage to the converting means;

means for movably supporting the optical head, including a fixing base; and

amplifying means for amplifying the current signals supplied form the another terminals of the photo-sensitive sections, which is provided on the fixing base.

In an optical disk apparatus according to the present invention, the detectors of a detecting unit are connected to each other at a common connection point, and the potential at this point is amplified and, in other words, an addition signal of detection signals generated from the detectors is amplified. Since the amplified signal is transmitted outside the movable section of the apparatus as an information reproduction signal, its quality is improved. Since, furthermore, only the amplifier is disposed on the movable section, the movable section can be prevented from increasing in weight, and high-access can be performed.

This invention can be more fully understood from the following detailed description when taken in conjunction with the accompanying drawings, in which:

FIG. 1 is a block diagram showing a high-speed amplifier circuit incorporated into an optical disk apparatus according to an embodiment of the present invention;

FIG. 2 is a block diagram schematically showing an optical disk apparatus according to the embodiment of the present invention;

FIG. 3 is a perspective view schematically showing an appearance of the optical disk apparatus of FIG. 2; and

FIG. 4 is a block diagram showing an amplifier circuit incorporated into an optical disk apparatus according to an another embodiment of the present invention.

An optical disk apparatus according to one embodiment of the present invention will now be described, with reference to the accompanying drawings.

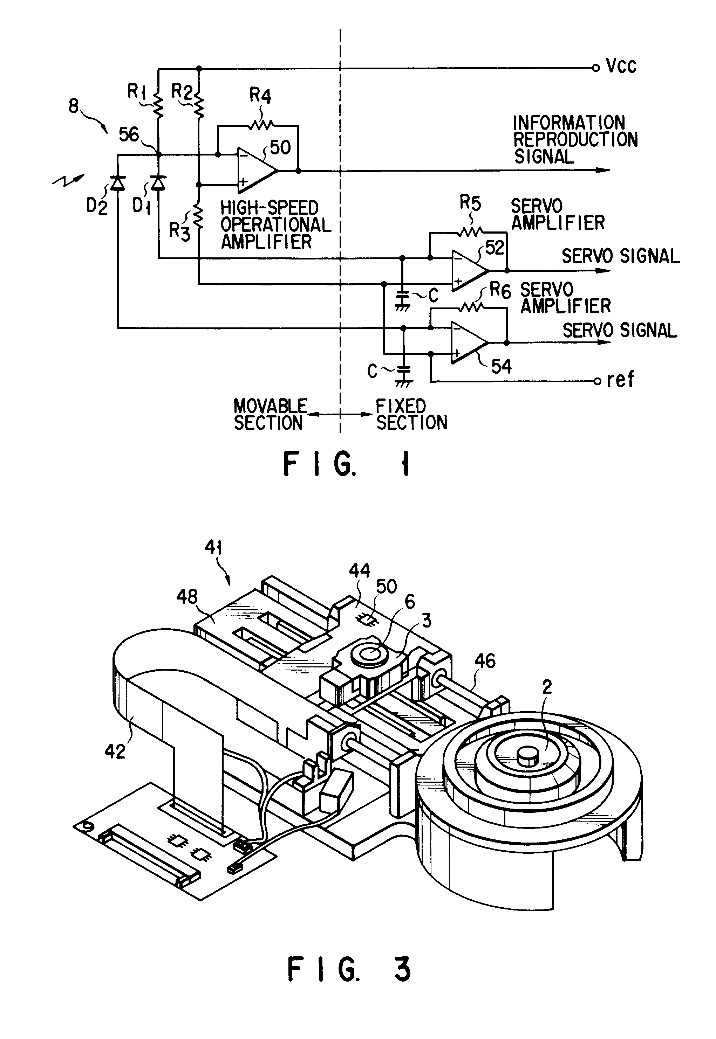

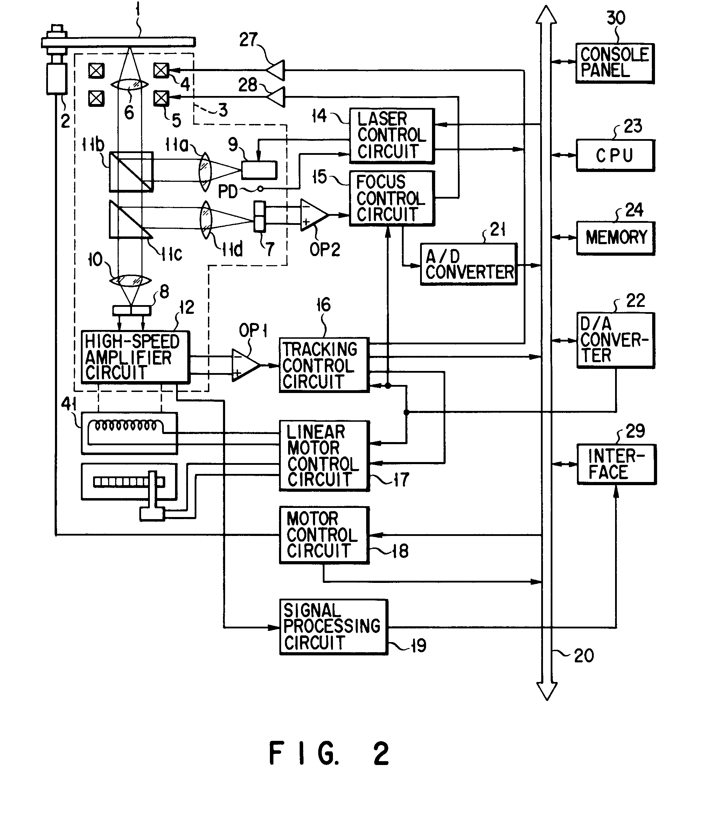

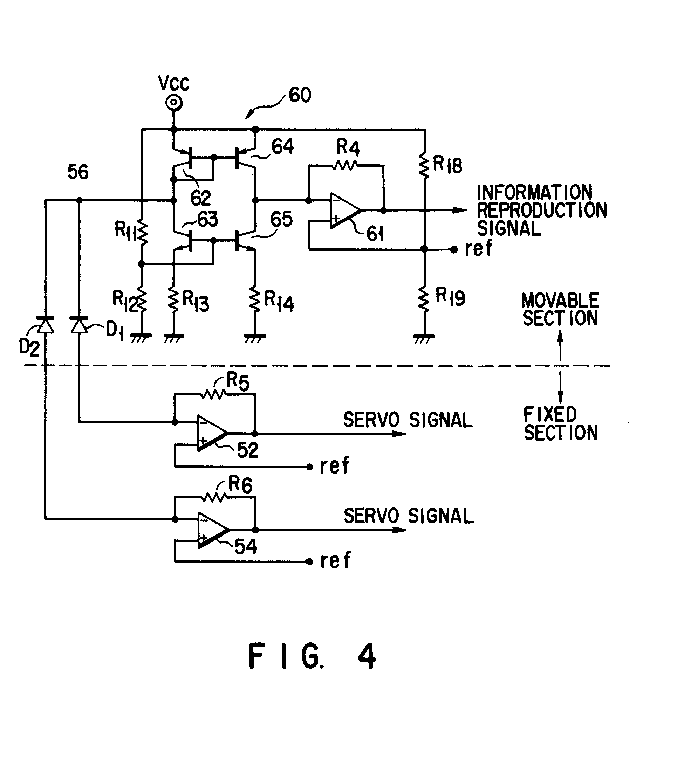

FIG. 1 is a block diagram showing a high-speed amplifier circuit incorporated into the optical disk apparatus, FIG. 2 is a block diagram schematically showing the optical disk apparatus according to the embodiment of the present invention, and FIG. 3 is a perspective view schematically showing an appearance of the optical disk apparatus of FIG. 2.

As shown in FIG. 2, recording tracks, that is, recording grooves are formed spirally or concentrically on the surface of an optical disk 1 serving as an optical recording medium, and the optical disk 1 is rotated, for example, at a fixed speed by a motor 2. The motor 2 is controlled by a motor control circuit 18. An optical head 3 is disposed under the optical head 1, and a light beam is emitted from the optical head 3 toward the optical disk 1. Information is optically reproduced from the optical disk 1 or recorded thereon by the light beam. A recording film on which pits are to be formed, a recording film using variations in phase, or a multilayer recording film is employed for the optical disk 1. Further, the optical disk 1 can be replaced with a photomagnetic disk for photomagnetically recording/reproducing information.

The optical head 3 includes an object lens 6 supported by a wire or a plate spring (not shown), and the object lens 6 can be moved in its focusing direction, i.e., in the direction of its optical axis by a drive coil 5 and moved in the tracking direction, i.e., in the direction perpendicular to the optical axis by a drive coil 4.

A laser beam is emitted from a semiconductor laser beam emitter 9, which is driven by a laser control circuit 14, onto the optical disk 1 through a collimator lens 11a, half prism 11b, and object lens 6. The light beam reflected from the optical disk 1 passes through the object lens 6 and half prism 11b, and is separated into two light beams by a half prism 11c. One of the two light beams is guided to a photodetector 7 via a focus detection optical system 11d, and the other light beam is guided to a photodetector 8 via a track detection optical system 10. The laser beam emitted from the semiconductor laser beam emitter 9 is detected by a detector PD, and its corresponding signal is fed back to the laser control circuit 14, with the result that the output of the light beam is stabilized.

A detection signal is supplied from the photodetector 7 for focus detection to an operation amplifier OP2, and its difference signal is generated therefrom. The difference signal is then supplied to a focus control circuit 15. The focus control circuit 15 generates a focus signal corresponding to the difference signal, and the focus signal is transmitted to the drive coil 5 through an amplifier 28. Thus, the object lens 6 is moved in the direction of the optical axis to be kept in the focusing state, and the minimum beam spot is formed on the optical disk 1.

A detection signal is supplied from the photodetector 8 for tracking detection to an operation amplifier OP1 through a high-speed amplifier circuit 12, described later, and its difference signal is generated therefrom. The difference signal is then supplied to a tracking control circuit 16. The tracking control circuit 16 generates a tracking signal corresponding to the difference signal, and the tracking signal is transmitted to the drive coil 4 trough an amplifier 27. Thus, the direction of the object lens 6 is changed to be kept in the tracking state, and a tracking guide is traced with the light beam. The tracking signal is also transmitted to a linear motor control circuit 17. A linear motor 41 is driven in response to a drive signal from the control circuit 17, and the optical head 3 is moved in the radial direction of the optical disk 1.

The focus signal and tracking signal are supplied to a CPU 23 through an A/D converter 21 and a bus 20 and processed for control relative to the focus control and tracking control. The linear motor control circuit 17 not only responds to the tracking signal from the tracking control circuit 16, but also applies a voltage, which corresponds to a difference between a reference speed signal and an actual speed signal delivered from a track count signal supplied from the CPU 23 through a D/A converter 22 in response to an instruction from a console panel 30, to a drive coil (conductor) in the linear motor 41, thereby to move the optical head 3 to a predetermined track.

An addition signal of detection signals output from the respective photodetection cells of the photodetector 8 in the focusing and tracking states is influenced by variations in reflectance of light from the pits formed on the tracks. The addition signal is supplied to a signal processing circuit 19, in which recording information and address information such as track numbers and sector numbers are reproduced. A reproduction signal generated in the signal processing circuit 19 is output to an information processing device (not shown) as an external device via an interface circuit 29.

As shown in FIG. 3, in the optical disk apparatus, the optical head 3 is disposed above a carriage 44 so that it can be moved in the radial direction of a spindle motor 2 on which the optical disk 1 is placed. In other words, the carriage 44 is supported movably by a guide shaft 46 arranged in the radial direction of the optical disk 1, a magnetic circuit 48 of the linear motor 41 for moving the carriage 44 is provided under the carriage 44. In order to supply a detection signal from the optical head 3 and a drive current for driving a drive section in the optical head, a flexible printed circuit 42 is connected to the carriage 44 and to an external circuit. Therefore, even if the carriage 44 is moved, the drive current can be supplied to the optical head 3, and the detection signal can be sent from the optical head to the external circuit. Moreover, a high-speed operational amplifier 50 of the high-speed amplifier circuit 12 shown in FIG. 2 is fixed onto the carriage 44.

As shown in FIG. 1, in the movable section of the apparatus including the high-speed amplifier circuit 12, the output side of the high-speed operational amplifier 50 is connected to the inverted-signal input side via a resistor R4 to constitute an amplification stage. Two detectors D1 and D2 of the photodetector 8 are connected to each other at a common connection point 56 on the power supply Vcc side, and the inverted-signal input side of the high-speed operational amplifier 50 is connected to the connection point 56. The connection point is also connected to the power supply Vcc via a resistor R1. The power supply Vcc is connected to the noninverted-signal input side of the high-speed operational amplifier 50 via a resistor R2.

In the fixed section of the apparatus outside the optical head 3, the noninverted-signal input sides of servo amplifiers 52 and 54 are connected to the noninverted-signal input side of the high-speed operational amplifier 50 through a resistor R3 and are connected to a reference power supply Vref. The inverted-signal input sides of the servo amplifiers 52 and 54 are connected to the detectors D1 and D2 of the photodetector 8. The output sides of the servo amplifiers 52 and 54 are connected to the inverted-signal input sides thereof via resistors R5 and R6, respectively, and the inverted-signal input sides of the servo amplifiers 52 and 54 are grounded through capacitors C1 and C2, respectively.

In the high-speed amplifier circuit shown in FIG. 1, when light beam are detected by the detectors D1 and D2 of the photodetector 8 to which a power supply voltage Vcc is applied through the resistor R1, the voltage signals are converted into current signals in accordance with the intensity of the light beams. In other words, the light beams are photoelectrically converted by the detectors D1 and D2 to generate current signals corresponding to the intensity of the light beams therefrom. The current signals are supplied from the anodes of the detectors to the servo amplifiers 52 and 54 and amplified therein. The amplified signals are converted into voltage signals V1 (= -I1 • R5) and V2 (= -I2 • R6), respectively, and the voltage signals are supplied to an operational amplifier OP1 as servo outputs V1 and V2. Then a push-pull signal corresponding to a difference between the servo outputs is generated from the operational amplifier OP1 and supplied to the tracking control circuit 16.

The same current signals flow from the cathodes of the detectors D1 and D2 of the photodetector 8 as those supplied from the anodes thereof. Thus the current (I1 + I2) flow through the connection point 56. The current (I1 + I2) is converted into a voltage signal by the high-speed operational amplifier 50, and the voltage signal is amplified. The amplified voltage signal is then output as a voltage signal V3 {= (I1 + I2) R4}. Since the voltage signal V3 corresponds to the addition signal of current signals output from the detectors D1 and D2 of the photodetector 8, it is supplied to the signal processing circuit 19 as an information reproduction signal. More specifically, the connection point between the resistors R2 and R3 is kept to a fixed voltage obtained by dividing the voltage Vcc by the resistors R2 and R3, and this voltage is applied to the noninverted-signal input terminal of the high-speed operational amplifier 50. The voltage of the connection point of the detectors D1 and D2 is varied with variations in the addition signal of the current signals from the detectors D1 and D2 and applied to the inverted-signal input terminal of the high-speed operational amplifier 50 as an addition detection signal. Therefore, the addition signal is amplified and output from the operational amplifier 50 as an information reproduction signal.

In the foregoing high-speed amplifier circuit, the current (I1 + I2) supplied as a detection signal from the detectors D1 and D2 of the photodetector 8, is normally in the order of several microamperes. The current is converted into a voltage signal by the high-speed operational amplifier 50 in the vicinity of the detectors D1 and D2. Therefore, noise can be prevented in advance from being mixed into the reproduction signal. Since only the operational amplifier 50 for amplifying the reproduction signal is mounted on the carriage 44, an increase in the weight applied to the carriage 44 can be minimized. Obviously, the carriage can be made lighter than the carriage on which an amplifier for amplifying a reproduction signal, a focus signal, and a tracking signal is mounted, with the result that high-speed access is possible. Since the frequency band required for the servo signal is several hundreds of kHz at most, the servo amplifiers 52 and 54 are disposed on the fixed section of the optical disk apparatus while the frequency band is restricted by the coupling capacitors C1 and C2. Further, only the operational amplifier 50 is mounted on the carriage 44. Therefore, a reproduction signal of good quality can be generated, without increasing the weight of the carriage 44.

The resistors R1, R2 and R3 have the following function. The resistor R1 serves as a bias resistor of the detectors D1 and D2. Since the cathode potential of the detectors D1 and D2 has to be higher than the anode potential thereof by about 3 V or more, a signal of good quality cannot be produced. For this reason, a reverse bias is applied to the detectors D1 and D2 by pulling up the power supply voltage Vcc by the resistor R1. The operational amplifier 50 serves as a differential amplifier by the resistors R1 to R4, and its output voltage V3 is expressed by:

$$V3 = Vref + \{R3/(R2 + R3)\} \cdot \{(R1 + R4) \cdot -(Vcc - Vref)/R1\} - (Vcc - Vref) \cdot R4/R1 - R4\} - (I1 + I2)\}$$

If R1 = R2 and R3 = R4, the above equation is given as:

$$V3 = Vref - R4\{ - (I1 + I2)\} = Vref + R4(I1 + I2)$$

Consequently, it turns out that the output voltage V3 is not influenced by variations in power supply voltage. Since the voltage V3 is based on the reference voltage Vref, it can be set arbitrarily whatever volts the reverse bias voltage is set to. Since the reverse bias voltage is represented by Vref + R3(Vcc - Vref), it can be set freely by optionally selecting the ratio of the resistor R2 to R3 so as not to adversely influence the output voltage or the ratio of current to voltage.

As described above, the detection signals generated from the anodes of the detectors of the optical head are used as servo signals, and the detection signals generated from the cathodes thereof are used for data reproduction. Thus, the frequency band of the servo signals can be extended in comparison with a conventional circuit in which a frequency band is separated by a filtaling circuit, and high-speed access, e.g., track count access of several hundreds of kHz can be performed. Moreover, since only the high-speed stage for amplifying the signals generated from the cathodes of the detectors is mounted on the carriage, a reproduction signal of good quality can be obtained, and a light optical head can be achieved.

Since the high-speed stage is constituted by a differential amplifier, the reverse bias and output voltage of the detectors can be set independently and freely to prevent them from being influenced by the power supply voltage.

An optical disk apparatus according to another embodiment of the present invention will now be described, with reference to FIG. 4.

In the circuit shown in FIG. 4, a current mirror circuit 60 serving as a buffer circuit is interposed between a common connection point 56 and a current amplifying circuit. More specifically, the input side of the current mirror circuit 60 is connected to the common connection point 56, and the output side thereof is connected to the noninverted-signal input terminal of a differential amplifier 61. In the current mirror circuit 60, a series circuit of transistors 62 and 63 and resistor R13 is connected between a power supply Vcc and a ground, and another series circuit of transistors 64 and 65 and resistor R14 is connected in parallel to the series circuit. The base and collector of the transistor 62 are connected to each other, the common connection point 56 is connected between the transistors 62 and 63, and the inverted-signal input terminal of the differential amplifier 61 is connected between the transistors 64 and 65. Furthermore, the base of the transistor 62 is connected to that of the transistor 64, and the base of the transistor 63 is connected to that of the transistor 65. A series circuit of resistors R11 and R12 is connected between the power supply Vcc and ground and so is a series circuit of resistors R18 and R19. The bases of the transistors 63 and 65 are connected between the resistors R11 and R12, and the noninverted-signal input terminal of the differential amplifier 61 is connected between the resistors R18 and R19.

In the circuit shown in FIG. 4, as in the circuit shown in FIG. 1, the detectors D1 and D2, current mirror circuit 60, and differential amplifier 61 are mounted on the carriage 44, and the servo amplifiers 52 and 54 are fixed to the fixed section of the apparatus.

In the circuit shown in FIG. 4, since a current having a considerably high level can be supplied to the detectors D1 and D2, their operations can be stabilized, and variations in the current supplied to the differential amplifier 61 can be lessened. More specifically, in the circuit shown in FIG. 4, the current supplied from the power supply Vcc is sent to the diode-connected transistor 62, and then the transistor 63 and detectors D1 and D2. Since the transistor 63 maintains a fixed base voltage, the fixed current always flow therethrough. Similarly, the current supplied from the power supply Vcc is sent to the transistor 64 and then flows into both the transistor 65 and differential amplifier 61, with the result that the current flowing through the series circuit of the transistor 65 and resistor R14 is also fixed. If the detectors D1 and D2 are irradiated with a laser beam and their impedance changes, the currents flowing through the detectors D1 and D2 is increased, and current flowing through the transistor 62, which corresponds to the level of both the currents of the detectors D1 and D2, is also increased. Therefore, the base voltage of the transistor 64 is changed, and the current flowing through the transistor 64 is increased. Since current flowing through the transistor 65 remains fixed, an increase in the current flowing through the transistor 64 is added to the current flowing through the differential amplifier 50. In short, if a laser beam is emitted to the detectors D1 and D2, the current supplied to the differential amplifier 50 is increased. Then, the current amplified by the differential amplifier 50 is supplied as a reproduction signal to the succeeding circuit provided on the fixed section of the apparatus.

The circuit shown in FIG. 4 allows a reproduction signal of good quality to be generated and also allows a relatively light optical head to be achieved, as the circuit shown in FIG. 1 does.

As has been described in detail, in the optical disk apparatus according to the present invention, a low-noise reproduction signal can be reliably generated, without exercising an adverse influence on a tracking detection signal.

## Claims

1. An optical disk apparatus comprising:

optical means (6) for converging a light beam on an optical recording medium (1) and guiding the light beam from the optical recording medium (1); and

at least two photo-sensitive sections (8) for converting the light beam guided from said optical means (6) into current signals, each having one and another terminals,

characterized in that the one terminals of said photo-sensitive sections (8) being connected to a common connecting point;

said optical disk apparatus further comprises:

means (R1, R2, 60) for applying a potential to the common connecting point (56) from a power supply (Vcc),

a differential amplifier (50, 61) having first and second input terminals, for amplifying a current signal flowing through said applying means (R1, R2, 60) and outputting the amplified signal as a reproducing signal, a divided voltage as a reference signal being applied from the power supply to the first input terminals and the second input terminals being connected to the common connecting point (56); and

amplifying means (52, 54) for amplifying the current signals from said photo-sensitive sections (8), to which the another terminals of said photo-sensitive sections are connected.

2. An optical disk apparatus according to claim 1, characterized by further comprising:

an optical head (3) on which said optical means (6), said photo-sensitive sections (8), said applying means (R1, R2, 60) and said differential amplifier (50) are mounted and which is movably supported; and

means (4, 41) for controlling a movement of said optical head in accordance with one of the current signals which is outputting from said amplifying means (52, 54).

3. An optical disk apparatus comprising:

converging means (6) for converging a light beam on an optical recording medium (1);

optical means (10, 11b, 11c) for guiding the light beam from the optical recording medium (1); and

at least two photo-sensitive sections (8) for converting the light beam from said optical means (10, 11b, 11c) into current signals, each having one and another terminals;

characterized in that the one terminals of said photo-sensitive sections (8) being connected to a common connecting point (56);

said optical disk apparatus further comprises:

an optical head (3) on which said converging means (6), said optical means (10, 11b, 11c) and said photo-sensitive sections (8) are mounted;

converting means (50), which is fixed on said optical head (3), for converting the current signal from the common connecting point (56) to a voltage signal;

a voltage source (Vcc), connected to the common connecting point, for applying a voltage to said photo-sensitive sections (8);

an element connected between said voltage source (Vcc) and the common connecting point (56);

dividing means (R2, R3) for dividing a voltage supplied from said voltage source (Vcc) and applying a divided voltage as a reference voltage to said converting means (50);

means (44) for movably supporting said optical head (3), including a fixing base; and

amplifying means (52, 54) for amplifying the current signals supplied form the another terminals of said photo-sensitive sections (8), which is provided on the fixing base.

4. The optical disk apparatus according to claim 3, characterized in that the optical recording medium (1) has a tracking guide.

5. The optical disk apparatus according to claim 4, characterized by further comprising:

means (OP1, 16) for generating a difference signal between the current signals supplied from said amplifying means (52, 54); and

means (4, 41) for controlling a movement of said optical disk in response to the difference signal, thereby to trace the tracking guide with the light beam.

FIG. 1

FIG. 3

F I G. 2

F I G. 4

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | EP-A-0 504 604 (NEC) | 1 | G11B7/13 |
| Y | * abstract; claim 1; figures 12,14 * | 2-5 | |
| | --- | | |
| Y | DE-A-38 43 621 (TOSHIBA) | 2-5 | |
| | * the whole document * | | |
| D,Y | & US-A-5 010 541 | 2-5 | |
| | --- | | |
| X | PATENT ABSTRACTS OF JAPAN vol. 17, no. 281 (P-1548) 31 May 1993 & JP-A-05 012 678 (TOSHIBA) 22 January 1993 | 1 | |
| A | * abstract * | 3 | |
| | --- | | |
| A | PATENT ABSTRACTS OF JAPAN vol. 13, no. 1 (P-808) 6 January 1989 & JP-A-63 211 131 (SONY) 2 September 1988 * abstract * | 1,3 | |
| | --- | | |
| A | PATENT ABSTRACTS OF JAPAN vol. 9, no. 265 (P-399) 23 October 1985 & JP-A-60 113 334 (ZENERARU) 19 June 1985 * abstract * | 1,3 | TECHNICAL FIELDS SEARCHED (Int.Cl.5) |
| | --- | | G11B |
| A | EP-A-0 207 517 (MITSUBISHI) * the whole document * | 2,3 | |
| | ----- | | |

The present search report has been drawn up for all claims

| Place of search | Date of completion of the search | Examiner |
|---|---|---|
| THE HAGUE | 8 July 1994 | Holubov, C |

EPO FORM 1503 03.82 (P04C01)